Europäisches Patentamt

European Patent Office

Office européen des brevets

(11) Veröffentlichungsnummer : **0 035 764**
**B1**

(12) **EUROPÄISCHE PATENTSCHRIFT**

(45) Veröffentlichungstag der Patentschrift :
04.07.84

(51) Int. Cl.³ : **B 23 D 19/04**

(21) Anmeldenummer : 81101608.8

(22) Anmeldetag : 06.03.81

(54) **Kreisschere für die Blechbearbeitung.**

(30) Priorität : 12.03.80 IT 6422880 U
20.06.80 IT 6426780 U
15.10.80 IT 6430180 U
25.10.80 DE 3040333
25.10.80 DE 3040348
25.10.80 DE 3040346

(43) Veröffentlichungstag der Anmeldung :
16.09.81 Patentblatt 81/37

(45) Bekanntmachung des Hinweises auf die Patenterteilung : 04.07.84 Patentblatt 84/27

(84) Benannte Vertragsstaaten :
**AT BE CH DE FR GB IT LI LU NL SE**

(56) Entgegenhaltungen :
DE-A- 1 652 762
DE-A- 2 136 268
FR-A-    505 135
US-A- 2 127 002
US-A- 2 209 211
US-A- 2 256 306
US-A- 2 466 947
US-A- 3 117 477

(73) Patentinhaber : **TIMAC S.r.l.**
**Via Cap. Sella Nr.15**
**Schio (VI) (IT)**

(72) Erfinder : **Tisato, Arnaldo**
**Via Brescia**
**I-36015 Schio (Vicenza) (IT)**

(74) Vertreter : **Patentanwälte Dr. Solf & Zapf**
**Schlossbleiche 20 Postfach 13 02 19**
**D-5600 Wuppertal 1 (DE)**

Jouve, 18, rue St-Denis, 75001 Paris, France

## Beschreibung

Die Erfindung betrifft eine Kreisschere für die Blechbearbeitung mit einer Spannvorrichtung zur drehbaren Einspannung einer Platine und mit einem Maschinengehäuse, in dem Kreismesser mit Antriebsmitteln untergebracht sind, wobei ein Obermesser mit einem Untermesser zusammenwirkt, und das Obermesser in einem auf- und abschwenkbar im Maschinengehäuse gelagerten Schwenkarm gehalten wird (US-A-2 466 947).

Die bekannten Kreisscheren verfügen über ein Obermesser und ein damit korrespondierendes Untermesser, die als Kreismesser ausgebildet sind. Die Achsen dieser Messer liegen räumlich in einer vertikalen Ebene. Problematisch bei einer solchen Anordnung ist, einen einwandfreien, insbesondere gratfreien Schnitt bei Platinen unterschiedlicher Dicke zu gewährleisten. Zur Lösung dieses Problems versetzt man meist die Achse der Platinenspannvorrichtung, die normalerweise ebenfalls in der vertikalen Ebene der Kreismesser angeordnet ist, neben diese Ebene. Der Versetzungsbetrag muß auf die jeweilige Blechdicke abgestimmt werden, was in der Regel empirisch geschieht. Eine genaue Einrichtung ist daher schwierig und zeitaufwendig und bedingt ggf. einen nicht unbeachtlichen Materialverlust.

Wenn bei den bekannten Kreisscheren mit einem tangentialen Anschnitt aus einer Platine, z. B. aus einem Maß- oder einem Untermaßblech, eine Ronde bzw. Scheibe oder dergleichen geschnitten werden soll, deren Durchmesser der Kantenlänge einer quadratischen Platine entspricht, muß die eingespannte Platine von Hand unter erheblichem kraftaufwand zwischen die Kreismesser geschoben werden, bis die Messer greifen und schneiden und dabei die Platine automatisch weitertransportiert wird. Sobald eine Ecke abgeschnitten ist, kommen die Messer aus dem Eingriff, so daß die Platine nicht weitertransportiert werden kann. Die bedienungsperson muß dann die Platine von Hand weiterdrehen, bis die Messer wieder greifen. Dieser Vorgang wiederholt sich bei jeder viereckigen Platine somit viermal. Abgesehen davon, daß die Bedienung insbesondere bei dicken Blechen kraft- und zeitaufwendig ist, besteht für die Bedienungsperson auch eine große Verletzungsgefahr ; es kann nämlich vorkommen, daß die Bedienungsperson an einer Ecke hängenbleibt, während die Kreismesser die Platine transportieren. Die Verletzungen, die dabei auftreten können, sind zum Teil erheblich.

Aus der US-A-2 466 947 ist eine Kreisschere für die Blechbearbeitung bekannt, die ein Maschinengehäuse aufweist, in dem die Kreismesser mit Antriebsmitteln untergebracht sind. Das Obermesser wirkt mit einem Untermesser zusammen und es ist eine Spannvorrichtung zur drehbaren Einspannung der Platine vorhanden. Das Untermesser ist gegenüber dem Obermesser seitlich versetzt angeordnet. Zum Ausgleich unterschiedlicher Dicken der zu bearbeitenden Bleche ist eine Feder vorgesehen, die es ermöglicht, daß eine Spannrolle nach vorne ausweichen kann. Obwohl versetzte Messer aus dieser Druckschrift bereits seit Jahren bekannt sind, ist bisher eine Anordnung versetzbarer Obermesser nicht bekanntgeworden.

Auch auf dem Sachgebiet der Schneidvorrichtungen, die lediglich gerade Schnitte durchführen, ist eine versetzbare Anordnung des Obermessers nicht bekannt. Beispielsweise wird in der US-A-3 117 477 eine Blechschere abgebildet und beschrieben, deren Obermesser als Kreismesser ausgebildet ist. Die Achse des Kreismessers ist seitlich versetzt zur Achse der Gegenlagerrolle. Es wird in der Druckschrift zum Ausdruck gebracht, daß der Betrag der seitlichen Versetzung abhängig ist vom Durchmesser des Kreismessers. Insoweit gibt diese Druckschrift keine Anregung für eine versetzbare Anordnung eines Obermessers.

Aufgabe der Erfindung ist, eine Einrichtung zu schaffen, mit der jederzeit eine reproduzierbare wiedereinstellbare Achsversetzung vorgenommen werden kann, ohne daß der Versetzungsbetrag bei der Umrüstung jedes Mal wieder empirisch ermittelt werden muß.

Diese Aufgabe wird bei einer Kreisschere der eingangs genannten Art durch die Merkmale des Anspruchs 1 oder des Anspruchs 2 gelöst. Vorteilhafte Ausführungsformen dieser Erfindung werden durch die Unteransprüche 3 bis 25 gekennzeichnet, wobei durch den Gegenstand des Anspruchs 18 ferner die Aufgabe gelöst wird, eine Kreisschere zu schaffen, bei der der Transport insbesondere auch bei tangentialen Anschnitten oder bei Anschnitten bei Untermaßplatinen automatisch erfolgt.

Anhand der Zeichnung wird die Erfindung beispielhaft näher erläutert. Es zeigen :

Figur 1   eine Seitenansicht des Schwenkarms der Kreisschere teilweise im Schnitt,

Figur 2   eine Draufsicht auf den Schwenkarm im teilweisen Anschnitt,

Figur 3   schematisch eine Achsversetzung zwischen Ober- und Untermesser,

Figur 4   schematisch eine Vorderansicht der Lagerung des Obermessers,

Figur 5   schematisch eine Draufsicht auf die Lagerung des Obermessers,

Figur 6   schematisch eine Seitenansicht einer anderen Obermesseranordnung der Kreisschere im Maschinengehäuse,

Figur 7   schematisch eine Draufsicht auf die Obermesseranordnung nach Figur 6,

Figur 8   schematisch eine Achsversetzung zwischen Ober- und Untermesser,

Figur 9   die Schwenklagerung des Obermessers im Schnitt,

Figur 10   eine Vorderansicht des seitlichen Widerlagers der Schwenklagerung im Schnitt,

Figur 11   eine Vorderansicht des verstellbaren seitlichen Widerlagers der Schwenklagerung im Schnitt,

Figur 12 schematisch eine Seitenansicht der Kreismesserantriebsanordnung der Kreisschere teilweise im Schnitt,

Figur 13 schematisch eine Draufsicht auf die Kreismesserantriebsanordnung.

Da die erfindungsgemäße Kreisschere in bezug auf das Maschinengehäuse, die im Maschinengehäuse angeordneten Antriebsmittel und Antriebsübertragungsmittel sowie die Spannvorrichtung handelsüblichen Maschinen entsprechen kann, wird auf eine detaillierte Abbildung und Beschreibung dieser Maschinenelemente verzichtet, um die Übersichtlichkeit nicht zu stören.

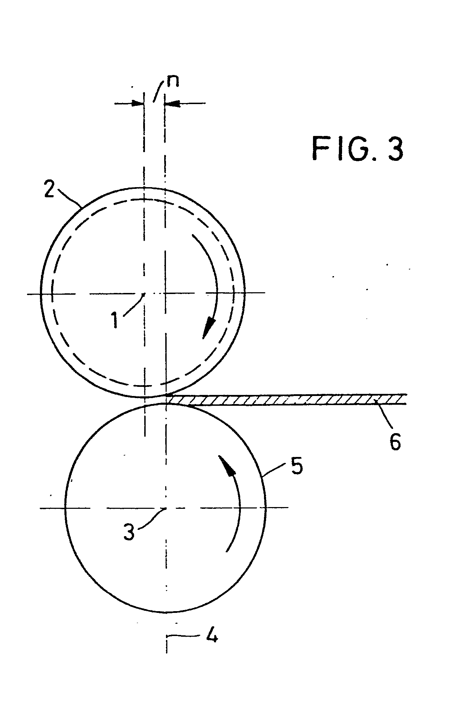

Figur 3 veranschaulicht die Erfindung prinzipiell, wonach die Achse 1 des Obermessers 2 seitlich neben die Achse 3 des Untermessers 5 bzw. neben die vertikale Ebene 4 versetzt ist. Der Betrag n der Versetzung richtet sich nach der Dicke der Platine 6, aus der z. B. eine Ronde ausgeschnitten werden soll.

Nach einer besonderen und beispielhaft abgebildeten Ausführungsform der Erfindung wird das Obermesser 2 zur Seite schwenkbar im Schwenkarm 7 gelagert. Der Schwenkarm 7 trägt bzw. lagert die Antriebswelle 8, die mit einem Kardangelenk mit üblichen Antriebsmitteln verbunden ist (nicht dargestellt). Der Schwenkarm 7 sitzt mit einer Achse 9 schwenkbar im Maschinengehäuse 10, das nur teilweise abgebildet ist, im Bereich des Blechdurchlasses. Das Schwenkmittel für den Schwenkarm 7, das in der Regel aus einer Kolbenzylindereinheit besteht und bei 12 angreift, ist wegen der Übersichtlichkeit nicht dargestellt. Der Schwenkarm 7 führt das Obermesser 2 an die Platine 6 heran, worauf der Antrieb des Ober- und ggf. auch Untermessers in Gang gesetzt wird und das Schneiden beginnen kann.

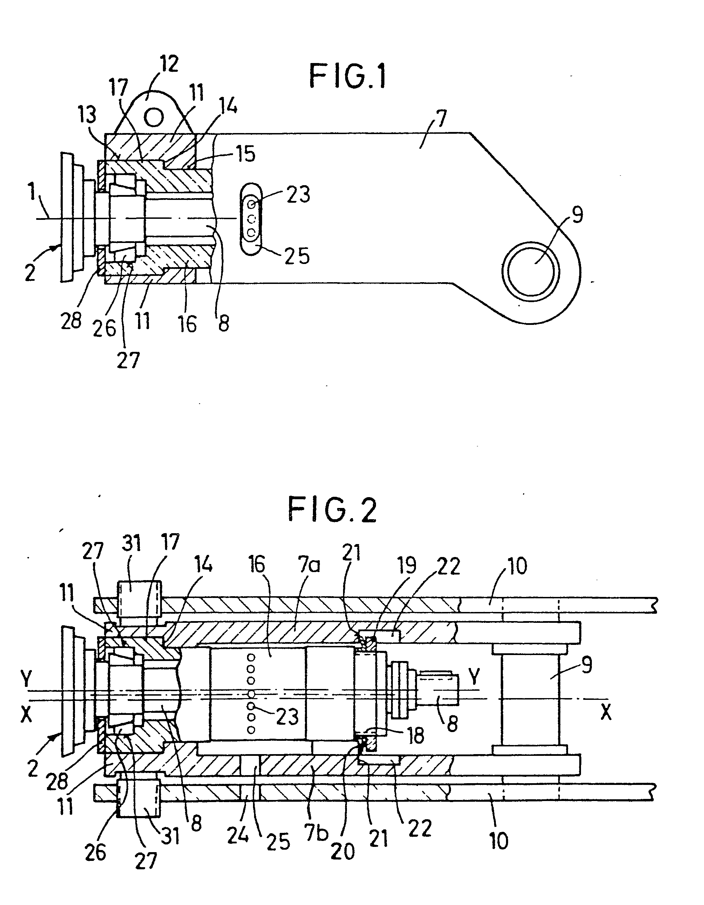

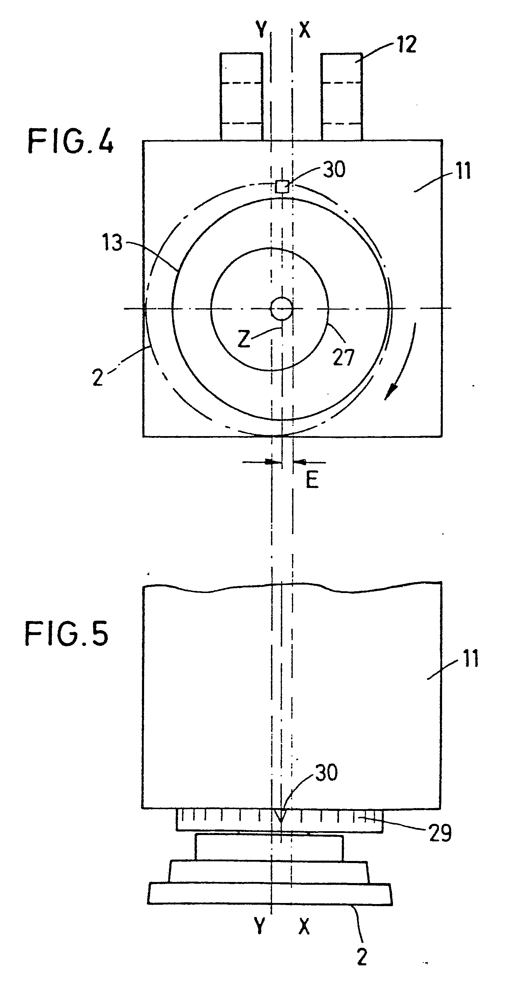

Zur erfindungsgemäßen seitlich schwenkbaren Lagerung des Obermessers 2, die zur Versetzung der Achse des Obermessers beiderseits zur Ebene 4 dienen kann, weist der Schwenkarm 7, der im wesentlichen aus den beiden Gabelarmen 7a und 7b besteht, im freien Endbereich einen Block 11 auf. Im Block 11 befindet sich eine Bohrung 13, die mit einer Ringstufe 14 in die Bohrung 15 geringeren Durchmessers übergeht. Die Bohrung 13 sitzt außermittig im Block 11, wie aus Figur 4 schematisch hervorgeht und was mit den unterschiedlichen Wandstärken in Fig. 1 und 2 angedeutet wird. Die Mitte des Blocks 11 wird durch die Ebene X gekennzeichnet ; die Mittelachse der Bohrung 13 liegt in der Ebene Z, also um den Betrag E versetzt zur Ebene X.

In den Bohrungen 13 und 15 lagert formschlüssig das Rohrstück 16, das im freien Endbereich außen einen umlaufenden Rand 17 aufweist, wobei sich die Kante des Randes 17 gegen die Ringstufe 14 abstützt, die als vorderes Widerlager dient. Zur Lagerung im hinteren Bereich trägt das Rohrstück 16 ein Außengewinde 18, auf das ein Klemmring 19 geschraubt ist, gegen den sich eine auf dem Rohrstück 16 sitzende Druckfeder 20, die als Tellerfeder ausgeführt sein kann, abstützt. Als Gegenlager für die Feder 20 dienen zweckmäßigerweise Kanten 21, die in Ausnehmungen 22 in den Gabelarmen 7a und 7b eingebracht sind.

Im Mantel des Rohrstückes 16 können Löcher 23 in einer Reihe vorgesehen sein, die zum Verdrehen des Rohres dienen, wobei im Gehäuse 10 und im Gabelarm 7b je eine Öffnung 24 bzw. 25 vorgesehen sein kann, damit die Löcher 23 von außen zugängig sind.

Im Innern des Rohrstückes 16 ist die Antriebswelle 8 des Obermessers 2 drehbar abgestützt. Im Bereich des Klemmrings 19 kann eine an sich bekannte Abstützung auf Kugel- oder Rollenlagern erfolgen (nicht dargestellt). Im vorderen Endbereich des Rohrstücks 16 dient vorzugsweise ein Pendelrollenlager oder Kegelrollenlager 26 zur Abstützung der Antriebswelle 8, wobei das Rollenlager in einer entsprechenden Aufnahmebohrung 27 des Rohrstücks 16 und auf der Welle 8 sitzt. Wesentlich ist, daß die Mittelachse des Rohrstücks 16 bzw. der Bohrung 27 vorzugsweise ebenfalls um den Betrag E (Fig. 4) seitlich versetzt zur Z-Ebene angeordnet ist, wobei der Versetzungsbetrag in der Ausgangs- bzw. Nullstellung, wenn die Obermesserachse mit der Untermesserachse in einer vertikalen Ebene liegt, dem Versetzungsbetrag der Bohrung 13 zwar vorzugsweise der Größe nach gleicht, jedoch räumlich entgegengesetzt vorgesehen ist, so daß sich die beiden Versetzungsbeträge aufheben.

Zweckmäßigerweise ist die Bohrung 27 frontal mit einem Schutzblech 28 abgedeckt, auf dem eine Skala 29 oder ein Zeiger 30 angeordnet sein kann. Im letzteren Fall ist die Skala frontal am Schwenkarm 7 angeordnet. In den Gehäusewandungen sitzende Widerlager 31 sorgen in an sich bekannter Weise für eine seitliche Abstützung des Schwenkarms 7.

Der Schwenkarm 7 lagert somit das Rohrstück 16 um den Betrag E exzentrisch zur Längsebene X versetzt, wobei das Rohrstück 16 auf Rollenlagern die Messerwelle 8 exzentrisch um denselben Betrag E, jedoch in umgekehrter Richtung, trägt, so daß in der Ausgangsstellung der Einrichtung die vertikale Mittenebene Y bzw. die Achse Y des Obermessers mit der Achse bzw. vertikalen Mittenebene X des Untermessers zusammenfällt. Die achsversetzung wird durch Drehen des Rohrstückes 16 mit einem in die Löcher 23 eingesetzten Griff bewerkstelligt. Da das Rohrstück 16 die Welle 8 exzentrisch stützt, wird je nach Drehrichtung die Achse Y des Obermessers 2 zur Achse X nach links oder rechts versetzt. Die maximal erreichbare Achsversetzung, die auf der Skala 29 abgelesen werden kann, ist gleich dem Doppelten der Exzentrizität E.

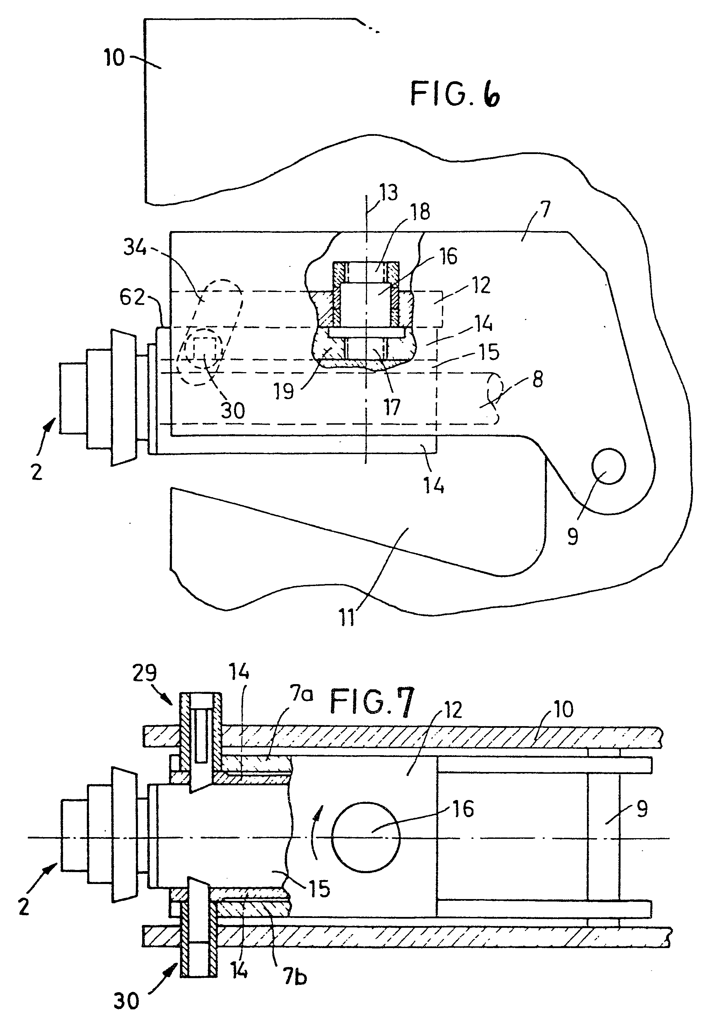

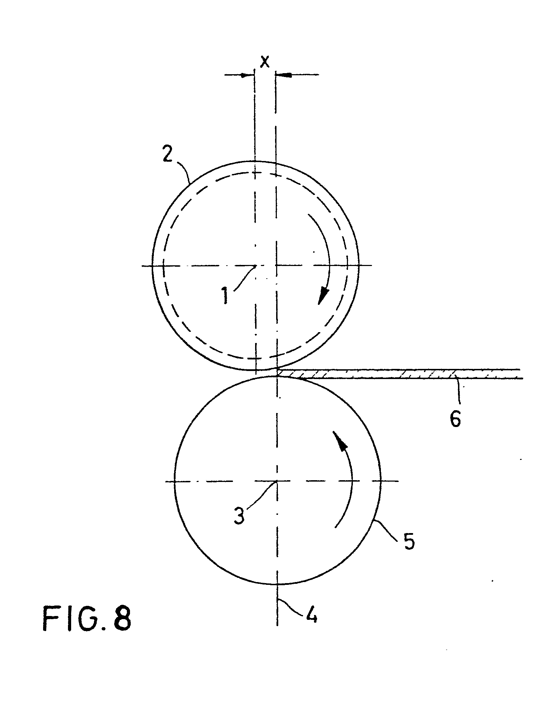

Nach einer besonderen und beispielhaft abgebildeten Ausführungsform der Erfindung (Fig. 6 bis 11) wird das Obermesser 2 zur Seite schwenkbar im Schwenkarm 7 gelagert. Der Schwenkarm 7 trägt bzw. lagert die Antriebswelle 8, die mit einem kardangelenk mit üblichen Antriebsmitteln verbunden ist (nicht dargestellt). Der Schwenkarm 7 sitzt mit einer Achse 9 schwenkbar im Maschinengehäuse 10, das nur teilweise abgebildet ist, im Bereich des Blechdurchlasses 11. Das Schwenkmittel für den Schwenkarm 7, das in der Regel aus einer Kolbenzylindereinheit besteht, ist wegen der Übersichtlichkeit nicht dargestellt. Der Schwenkarm 7 führt das Obermesser 2 an die Platine 6 heran, worauf der Antrieb des Ober- und ggf. auch Untermessers in Gang gesetzt wird und das Schneiden beginnen kann.

Zur erfindungsgemäßen seitlich schwenkbaren Lagerung des Obermessers 2, die zur Versetzung der Achse des Obermessers beiderseits zur Ebene 4 dienen kann, ist im Schwenkarm 7 eine Tragplatte 12 quer zwischen die beiden Gabelarme 7a und 7b eingesetzt. Unter der Tragplatte 12 hängt um eine vertikale bzw. senkrecht zur Plattenebene angeordnete Achse 13 seitlich verdrehbar ein Block 14, der die Antriebswelle 8 in einer Buchse 15 lagert und führt, wobei endseitig auf der Antriebswelle 8 in an sich bekannter Weise das Obermesser 2 sitzt.

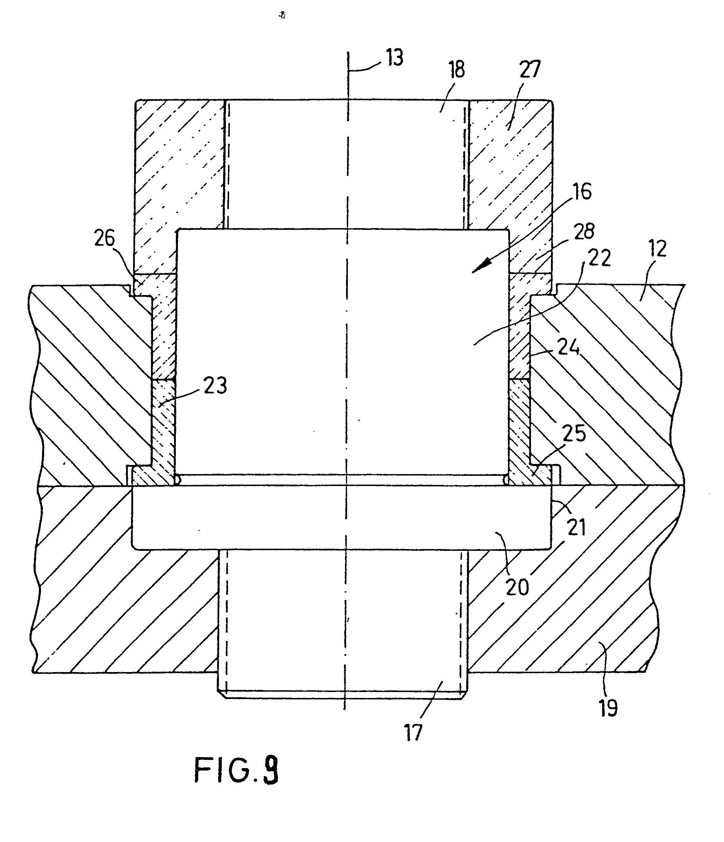

Die Schwenklagerung für den im Querschnitt viereckigen Block 14 weist einen Gewindebolzen 16 auf. Der Bolzen 16 ist ensprechend Figuren 6 und 9 endseitig mit Gewindeabschnitten 17 und 18 versehen, wobei der Gewindeabschnitt 17 in die Oberwandung 19 des Blocks 14 eingeschraubt ist. An den Abschnitt 17 schließt sich ein Flansch 20 an, der in einer entsprechenden Ausnehmung 21 der Oberwandung 19 sitzt. Der Mittelteil 22 des Bolzens 16 steckt drehbar in einer quermittig geteilten Buchse 23, die fest in einer Bohrung 24 in der Tragplatte 12 eingelassen ist. Der Flanschrand 20 stützt sich dabei gegen den unteren Buchsenrand 25 ab, während sich gegen den oberen Buchsenrand 26 ein abgestufter Rand 28 der Mutter 27 abstützt, die auf den Gewindeabschnitt 18 geschraubt ist. Auf diese Weise ist der Block 14 und damit auch die Antriebswelle 8 bzw. die Achse des Obermessers 2 seitlich um die Achse 13 verdrehbar im Schwenkarm 7 gelagert, wodurch die seitliche Versetzung der Obermesserachse relativ zur Untermesserachse gewährleistet wird.

Die Verschwenkung des Obermessers 2 wird mit den Widerlagern 29 und 30 bewerkstelligt. Diese Widerlager sitzen jeweils seitlich in den Gabelarmen 7a und 7b des Schwenkarms 7 und wirken seitlich auf den Block 14 dergestalt, daß eine seitliche Verstellung bzw. Verschwenkung eingestellt werden kann.

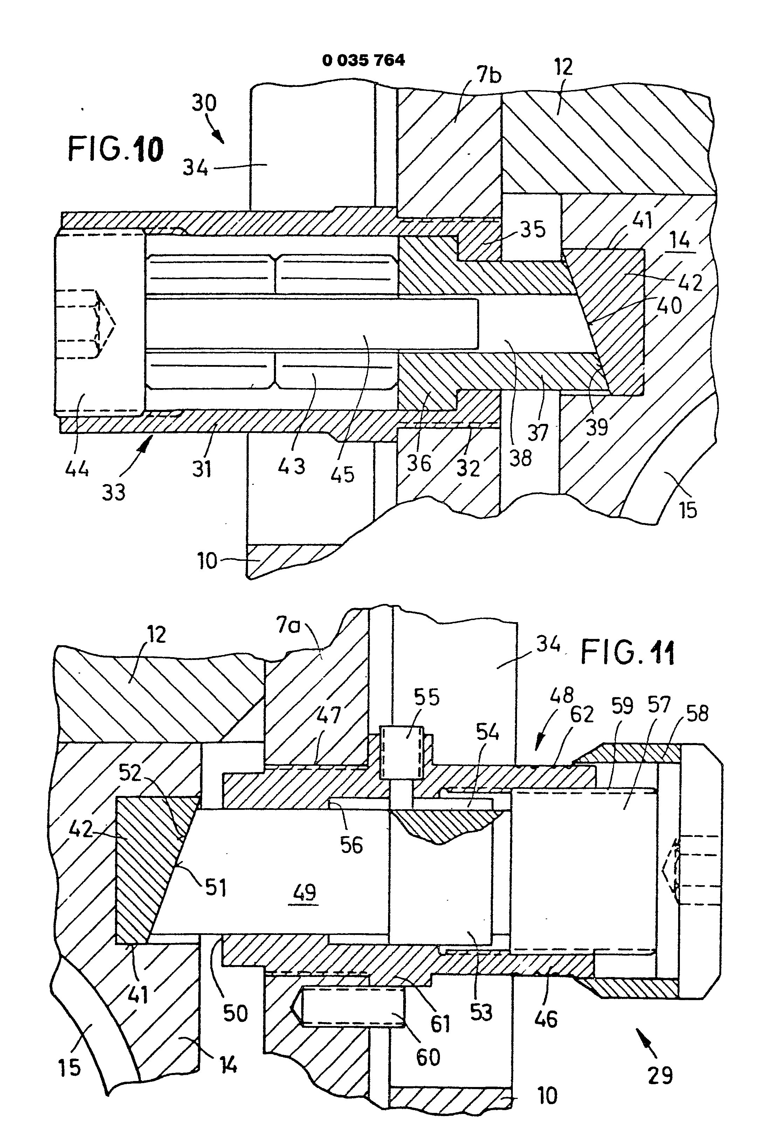

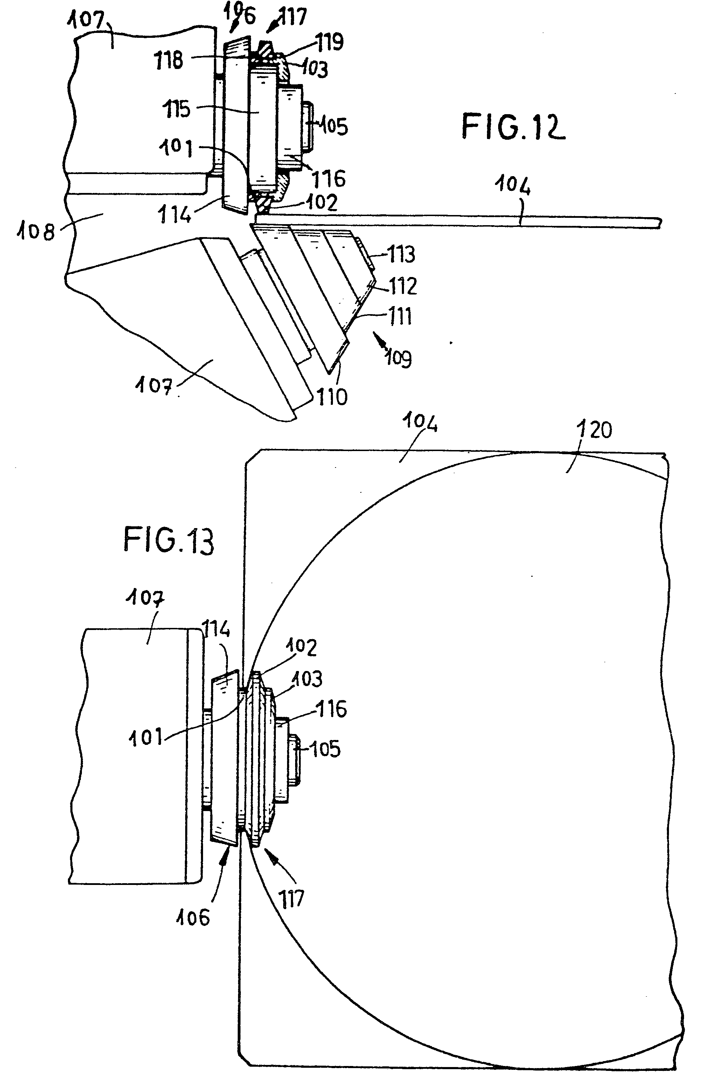

Zweckmäßigerweise sind das Widerlager 29 (Fig. 11) verstellbar und das Widerlager 30 (Fig. 10) fest eingestellt ausgeführt.

Das Widerlager 30 weist eine Hülse 31 auf, die mit dem Gewinde 32 in den Gabelarm 7b eingeschraubt ist. Mit dem freien Teil 33 durchgreift die Hülse 31 eine schräg angeordnete Öffnung 34 im Maschinengehäuse 10. Auf einem Bodenrand 35 der Hülse 31 sitzt mit einem Gegenrand 36 eine Stützhülse 37 mit einer Bohrung 38, die im freien Endbereich abgeschrägt ist, so daß sich eine schräge Stützringfläche 39 ergibt. Die Stützringfläche 39 stützt sich gegen eine entsprechend abgeschrägte Widerlagerfläche 40 ab, die im Durchmesser größer ist als die Fläche 39 und in einer Bohrung 41 des Blocks 14 in Form eines Einsatzstückes 42 angeordnet ist. Die Stützhülse 37 wird in der Hülse 31 mit einem Druckfederelement 43 gegen den Bodenrand 35 gedrückt, wobei das Federelement 43 sich gegen eine in die Hülse 31 endseitig eingeschraubte Mutter 44 abstützt. Die Mutter 44 besitzt vorzugsweise einen Stehbolzen 45, der das Federelement 43 durchgreift und in der Bohrung 38 der Stützhülse 37 geführt wird. Wenn der Block 14 in Richtung auf den Gabelarm 7b geschwenkt wird, wird die Stützhülse 37 gegen den Druck des Federelementes 43 axial in der Hülse 31 kolbenartig in die Hülse geschoben, wobei in vorteilhafter Weise die Schrägflächen 39 und 40 immerflächig aufeinander gleiten können.

Die Verschwenkung wird mit dem Widerlager 29 bewerkstelligt. Es weist ebenfalls eine Hülse 46 auf, die mit einem Gewinde 47 in den Gabelarm 7a des Schwenkarms 7 eingeschraubt ist. Der freie Teil 48 der Hülse 46 durchgreift auch eine schräggestellte Öffnung 34 im Gehäuse 10, so daß die Verschwenkung des Schwenkarmes 7 um die Achse 9 nicht durch die Widerlager 29 und 30 behindert wird. In der Hülse 46 gleitet formschlüssig ein Anschlagbolzen 49, der den Hülsenmund 50 durchgreift und am freien Endbereich eine Schrägfläche 51 aufweist. Die Schrägfläche 51 Sitzt auf einer Schrägfläche 52 eines Einsatzstückes 42, das aus einem Material besteht, auf dem die Schrägfläche 51 gut gleiten kann und das in einer Bohrung 41 im Block 14 eingelassen ist.

Der Bolzen 49 weist einen Bund 53 auf, in den eine Längsnut 54 eingebracht ist, in der das Schaftende einer in der Hülsenwandung sitzenden Schraube 55 steckt, so daß der Bolzen 49 gegen Verdrehung gesichert ist. Der Bund 53 korrespondiert mit einer Anschlagringkante 56 in der Hülse 46, indem der Bolzen 49 nur bis zu dieser Anschlagkante verschoben werden kann.

Im freien Endbereich des Teils 48 der Hülse 46 ist ein Gewindebolzen 57 eingeschraubt, der flächig gegen den Gleitbolzen 49 anschlägt. Wird der Gewindebolzen 57 eingeschraubt, verschiebt er den Gleitbolzen 49 gegen den Block 14, der zur Seite geschwenkt wird, gegen den Federdruck des Widerlagers 30. Beim Herausdrehen des Gewindebolzens 57 verschwenkt der Block 14 zur anderen Seite. Auf dem Bolzen 57 kann eine Kappe 58 angeordnet sein, die das Drehen des Bolzens erleichtert und das Gewinde 59 gegen Verschmutzung schützen kann. Gegen ein Lösen der Verschraubung des Gewindes 47 kann in an sich bekannter Weise zweckmäßigerweise noch eine Schraube 60 vorgesehen sein, die einen Steg 61 der Hülse 46 durchgreift und in den Gabelarm 7a eingeschraubt ist.

Der Verschwenkweg des Blocks 14 bzw. der Obermesserachse kann an einer Skala 62 abgelesen werden, die entweder auf dem Hülsenteil 48 außen aufgebracht oder frontal an der Tragplatte 12 markiert ist. Im letzteren Fall ist zweckmäßigerweise ein Zeiger 63 an der Stirnwand des Blocks 14 angeordnet, der mit der Skala 62 an der Tragplatte 12 korrespondiert.

Mit der Erfindung gelingt es somit, mit relativ einfachen Mitteln eine genaue und reproduzierbare Achsversetzung des Obermessers relativ zur Achse des Untermessers und zur Achse der Platinenspannvorrichtung selbst bei auf- und abschwenkbarer Lagerung des Obermessers durchzuführen.

Nach einer weiteren Ausführungsform der Erfindung ist im Bereich der Kreismesser der Kreisschere eine Antriebsvorrichtung für die Platine vorgesehen, die die Platine insbesondere bei tangentialen und Untermaß-Anschnitten automatisch zumindest so lange transportiert, bis die Kreismesser die Platine erfaßt haben und ihrerseits den Transport gewährleisten.

Die in den Figuren 12 und 13 abgebildete besondere Ausführungsform der Erfindung sieht eine Gummirolle 102 als Mitnehmerrolle vor, die auf der Antriebswelle 105 des Obermessers 106 sitzt. Die Kreisschere weist in der Beispielhaft dargestellten Ausführung das Maschinengehäuse 107 auf, das nur teilweise und schematisch gezeichnet ist. Das Maschinengehäuse 107 bildet den Platinendurchlaß 108 und lagert die Antriebswelle 105 auf- und bis zur waagerechten Stellung abschwenkbar (nicht dargestellt).

Die Welle 113 des Untermessers 109 kann — wie abgebildet — fest und schräg nach oben weisend im Maschinengehäuse 107 angeordnet sein. Das Untermesser besteht in der Regel aus dem unteren Kreismesser 110, dem Halteflansch 111 und der Mutter 112, mit der das Kreismesser 110 auf die ggf. angetriebene Welle 113 geschraubt ist.

Das Obermesser 106 weist das Kreismesser 114 auf, gegen das der Halteflansch 115 gesetzt ist, wobei die Mutter 116 auf die Antriebswelle 105 geschraubt ist und das Kreismesser 114 auf der Welle 105 positioniert.

Nach der Erfindung sitzt vorzugsweise auf dem Halteflansch 115 eine Mitnehmerrolle 117. Die Mitnehmerrolle besteht aus dem hinteren kreisringförmigen Flansch 101 und dem vorderen kreisringförmigen Flansch 103, zwischen denen ein Mitnehmerring 102 aus einem elastischen Material, z. B. Gummi oder Kunststoff, eingeklemmt sitzt. Zu diesem Zweck weisen der Flansch 101 eine Ringnut 118 und der Flansch 103 eine entsprechende Ringnut 119 auf, die so ausgerichtet sind, daß sie eine Ringkammer bilden, in der der Mitnehmerring 102 eingeklemmt sitzt. Dabei ist vorteilhaft, wenn der Flansch 103 mit Schrauben am Flansch 115 befestigt ist, so daß der Ring 102 und der Flansch 101 am Kreismesser 114 festgesetzt sind.

Der Außendurchmesser des Ringes 102 wird nach der Erfindung so groß gewählt, daß sichergestellt ist, daß der Ring 102 die Platine 104 mitnimmt, wenn das Obermesser 106 angetrieben wird, auch wenn z. B. das Obermesser noch nicht in Eingriff steht mit der Platine 104, aus der die Ronde 120 ausgeschnitten werden soll und die — wie aus Figur 1 und 2 ersichtlich — Untermaß aufweist. Die Reibkraft der Mitnehmerrolle 117 ist so zu wählen, daß auch schwere, dicke Bleche bewegt werden können, ohne daß die Rolle 117 durchrutscht.

Beispielsweise hat sich gezeigt, daß für Bleche zwischen einer Dicke von 0,8 bis 10 mm und Kantenlängen der Platine von bis zu etwa 2 600 mm bei der Wahl eines elastischen Ringes 102 aus Gummi oder Kunststoff der Außendurchmesser D der Mitnehmerrolle 117 der Formel

$$D = d - 2\,S + 2\,K$$

genügen sollte, wobei D der Durchmesser der Mitnehmerrolle, d der Durchmesser des Kreismessers, S die Blechdicke (jeweils in mm angegeben) und K ein Koeffizient ist, der zwischen 1 und 3 schwankt je nach Art des Materials, aus dem der Mitnehmerring 102 der Mitnehmerrolle 117 hergestellt ist.

Die Funktionsweise der beispielhaft dargestellten Antriebsvorrichtung für die Platine ist wie folgt: Das Obermesser wird in Arbeitsstellung nach unten geschwenkt. Da das Blech unter Maß ist, ist das angetriebene Messer nicht in der Lage, die Platine in Bewegung zu setzen. Dies wird durch die Reibung der mitnehmerrolle 117 bewirkt, die mit dem Blech in einen Reibungskontakt gebracht wird.

Nach der Erfindung ist es mit besonders einfachen Mitteln gelungen, einen wirksamen Antrieb für die Platine mit einem der Kreismesser der Kreisschere zu Kombinieren, wobei der Antrieb des Jeweiligen Kreismessers für den Antrieb der Platinenantriebsvorrichtung genutzt wird.

**Ansprüche**

1. Kreisschere für die Blechbearbeitung mit einer Spannvorrichtung zur drehbaren Einspannung einer Platine und mit einem Maschinengehäuse (10), in dem Kreismesser (2, 5) mit Antriebsmitteln untergebracht sind, wobei ein Obermesser (2) mit einem Untermesser (5) zusammenwirkt, und das Obermesser (2) in einem auf- und abschwenkbar im Maschinengehäuse (10) gelagerten Schwenkarm (7) gehalten wird, dadurch gekennzeichnet, daß das Obermesser (2) im Schwenkarm (7) um eine zur Achse (1) der Antriebswelle (8) parallel verlaufende Achse (Fig. 4) seitlich verschwenkbar angeordnet ist.

2. Kreisschere für die Blechbearbeitung mit einer Spannvorrichtung zur drehbaren Einspannung einer Platine und mit einem Maschinengehäuse (10), in dem Kreismesser (2, 5) mit Antriebsmitteln untergebracht sind, wobei ein Obermesser (2) mit einem Untermesser (5) zusammenwirkt, und das Obermesser (2) in einem auf- und abschwenkbar im Maschinengehäuse (10) gelagerten Schwenkarm (7) gehalten wird, dadurch gekennzeichnet, daß das Obermesser (2) im Schwenkarm (7) um eine zur Achse (1) der Antriebswelle (8) senkrechte Achse 13 (Fig. 6) seitlich verschwenkbar angeordnet ist.

3. Kreisschere nach Anspruch 1 oder 2, dadurch gekennzeichnet, daß die im Maschinengehäuse (10) sitzende Welle des Untermessers (5) schräg nach oben weist.

4. Kreisschere nach Anspruch 1 und/oder 3, dadurch gekennzeichnet, daß der Schwenkarm (7) ein Rohrstück (16) exzentrisch zur Längsebene (X) versetzt lagert, wobei das Rohrstück (16) auf Rollenlagern die Messerwelle (8) entgegengesetzt exzentrisch trägt, wobei das Rohrstück (16) um die Längsachse drehbar im Schwenkarm (7) angeordnet ist.

5. Kreisschere nach Anspruch 4, dadurch gekennzeichnet, daß der Schwenkarm (7), der aus zwei Gabelarmen (7a, 7b) besteht, im freien Endbereich einen Block (11) aufweist, in dem sich eine Bohrung (13) befindet, die mit einer Ringstufe (14) in die Bohrung (15) geringeren Durchmessers übergeht, die Bohrung (13) außermittig im Block (11) sitzt, in den Bohrungen (13, 15) formschlüssig das Rohrstück (16) drehbar lagert, das im freien Endbereich außen einen umlaufenden Rand (17) aufweist, wobei sich die Kante des Randes (17) gegen die Ringstufe (14) abstützt, das Rohrstück (16) ein Außengewinde (18) aufweist, auf das ein Klemmring (19) geschraubt ist, gegen den sich eine auf dem Rohrstück (16) sitzende Druckfeder (20) abstützt, für die Kanten (21) in Ausnehmungen (22) in den Gabelarmen (7a, 7b) als Gegenlager dienen, im Innern des Rohrstückes (16) die Antriebswelle (8) des Obermessers (2) drehbar abgestützt ist, wozu vorzugsweise ein Kegelrollenlager (26) dient, das in einer Aufnahmebohrung (27) des Rohrstückes (16) und auf der Welle (8) sitzt, wobei die Mittelachse des Rohrstückes (16) seitlich versetzt angeordnet ist.

6. Kreisschere nach Anspruch 4 und/oder 5, dadurch gekennzeichnet, daß im Mantel des Rohrstückes (16) Löcher (23) in einer Querreihe vorgesehen sind, wobei vorzugsweise im Gehäuse (10) und im Gabelarm (7b) eine Öffnung (24) bzw. (25) vorgesehen ist.

7. Kreisschere nach einem oder mehreren der Ansprüche 4 bis 6, dadurch gekennzeichnet, daß die Mittelachse des Rohrstückes (16) um den Betrag E seitlich versetzt zur Z-Ebene angeordnet ist, wobei der Versetzungsbetrag dem Versetzungsbetrag der Bohrung (13) gleicht, jedoch räumlich entgegengesetzt vorgesehen ist.

8. Kreisschere nach einem oder mehreren der Ansprüche 4 bis 7, dadurch gekennzeichnet, daß die Bohrung (27) frontal mit einem Schutzblech (28) abgedeckt ist, auf dem ein Zeiger (30) angeordnet ist, wobei eine Skala (29) frontal am Schwenkarm (7) eingebracht ist.

9. Kreisschere nach Anspruch 2 und/oder 3, dadurch gekennzeichnet, daß im Schwenkarm (7) eine Tragplatte (12) quer zwischen die beiden Gabelarme (7a und 7b) eingesetzt ist, unter der ein Block (14) um eine senkrecht zur Plattenebene angeordnete Achse (13) seitlich verdrehbar hängt, der die Antriebswelle (8) des Obermessers (2) in einer Buchse (15) lagert.

10. Kreisschere nach Anspruch 9, dadurch gekennzeichnet, daß die Schwenklagerung des Blocks (14) (Fig. 6, 7, 9) einen Gewindebolzen (16) aufweist, der Bolzen (16) endseitig mit Gewindeabschnitten (17, 18) versehen ist, wobei der Gewindeabschnitt (17) in die Oberwandung (19) des Blocks (14) eingeschraubt ist, an den Abschnitt (17) sich ein Flansch (20) anschließt, der in einer entsprechenden Ausnehmung (21) der Oberwandung (19) sitzt, der Mittelteil (22) des Bolzens (16) drehbar in einer quermittig geteilten Buchse (23) steckt, die fest in einer Bohrung (24) in der Tragplatte (12) eingelassen ist, der Flanschrand (20) sich gegen den unteren Buchsenrand (25) abstützt, während sich gegen den oberen Buchsenrand (26) ein abgestufter Rand (28) der Mutter (27) abstützt, die auf den Gewindeabschnitt (18) geschraubt ist.

11. Kreisschere nach Anspruch 10, dadurch gekennzeichnet, daß die Verschwenkung des obermessers (2) mit den Widerlagern (29, 30) (Fig. 7) bewerkstelligt wird, die seitlich in den Gabelarmen (7a, 7b) des Schwenkarmes (7) sitzen.

12. Kreisschere nach Anspruch 11, dadurch gekennzeichnet, daß das Widerlager (30) eine Hülse (31) aufweist, die mit einem Gewinde (32) in den Gabelarm (7b) eingeschraubt ist, mit dem freien Teil (33) die Hülse (31) eine schräg angeordnete Öffnung (34) im Maschinengehäuse (10) durchgreift, auf dem Bodenrand (35) der Hülse (31) mit einem Gegenrand (36) eine Stützhülse (37) mit einer Bohrung (38) sitzt, die im freien Endbereich abgeschrägt ist, so daß sich eine schräge Stützringfläche (39) ergibt, die Stützringfläche (39) gegen eine entsprechend abgeschrägte Widerlagerfläche (40) abstützt, die im Durchmesser größer ist als die Fläche (39) und in einer Bohrung (41) des Blocks (14) angeordnet ist, die Stützhülse (37) in der Hülse (31) mit einem Druckfederelement (43) gegen den Bodenrand (35) gedrückt wird, wobei das Federelement (43) sich gegen eine in die Hülse (31) endseitig eingeschraubte Mutter (44) abstützt.

13. Kreisschere nach Anspruch 12, dadurch gekennzeichnet, daß die Mutter (44) einen Stehbolzen (45) besitzt, der das Federelement (43) durchgreift und in der Bohrung (38) der Stützhülse (37) geführt wird.

14. Kreisschere nach Anspruch 11, dadurch gekennzeichnet, daß das Widerlager (29) eine Hülse (46) aufweist, die mit einem Gewinde (47) in den Gabelarm (7a) des Schwenkarms (7) eingeschraubt ist, der freie Teil (48) der Hülse (46) eine schräggestellte Öffnung (34) im Gehäuse (10) durchgreift, in der Hülse (46) formschlüssig ein Anschlagbolzen (49) hin- und hergleitend sitzt, der den Hülsenmund (50) durchgreift und am freien Endbereich eine Schrägfläche (51) aufweist, die Schrägfläche (51) auf einer Schrägfläche (52) eines Einsatzstückes (42) sitzt, das in einer Bohrung (41) im Block (14) eingelassen ist, der Bolzen (49) einen Bund (53) aufweist, in den eine Längsnut (54) eingebracht ist, in der das Schaftende einer in der Hülsenwandung sitzenden Schraube (55) steckt, der Bund (53) mit einer Anschlagringkante (56) in der Hülse (46) korrespondiert, im freien Endbereich des Teils (48) der Hülse (46) ein Gewindebolzen (57) eingeschraubt ist, der flächig gegen den Gleitbolzen (49) anschlägt.

15. Kreisschere nach Anspruch 14, dadurch gekennzeichnet, daß auf dem Bolzen (57) eine Kappe (58) angeordnet ist.

16. Kreisschere nach Anspruch 14 und/oder 15, dadurch gekennzeichnet, daß eine Schraube (60) vorgesehen ist, die einen Steg (61) der Hülse (46) durchgreift und in den Gabelarm (7a) eingeschraubt ist.

17. Kreisschere nach einem oder mehreren der Ansprüche 9 bis 16, dadurch gekennzeichnet, daß eine Skala (62) frontal an der Tragplatte (12) aufgebracht und ein Zeiger (63) an der Stirnwand des Blocks (14) angeordnet ist.

18. Kreisschere nach einem oder mehreren der Ansprüche 1 bis 17, gekennzeichnet durch eine mit mindestens einem Kreismesserantrieb gekoppelte Antriebsvorrichtung für die Platine (104).

19. Kreisschere nach Anspruch 18, dadurch gekennzeichnet, daß die Antriebsvorrichtung mit der Antriebswelle (105) des Obermessers (106) gekoppelt ist. (Fig. 12).

20. Kreisschere nach Anspruch 19, dadurch gekennzeichnet, daß die Antriebsvorrichtung auf der Antriebswelle (105) des auf- und abschwenkbar gelagerten Obermessers (106) sitzt.

21. Kreisschere nach einem oder mehreren der Ansprüche 18 bis 20, dadurch gekennzeichnet, daß die Antriebsvorrichtung eine Mitnehmerrolle (117) ist.

22. Kreisschere nach Anspruch 21, dadurch gekennzeichnet, daß die Mitnehmerrolle (117) aus einem hinteren Flanschring (101) und einem vorderen Flanschring (102) besteht, zwischen denen ein Mitnehmerring (102) aus elastischem Material eingeklemmt sitzt.

23. Kreisschere nach Anspruch 22, dadurch gekennzeichnet, daß zur Klemmung des Mitnehmerrings (102) im Flanschring (101) eine Ringnut (118) und im Flanschring (103) eine entsprechende Ringnut (119) angeordnet sind, die eine Ringkammer bilden, wobei der Flanschring (103) mit Schrauben oder dgl. Befestigungsmitteln am Flanschring (115) des Kreismessers (106) befestigt ist.

24. Kreisschere nach einem oder mehreren der Ansprüche 21 bis 23, dadurch gekennzeichnet, daß der Außendurchmesser D des Mitnehmerrings (102) der folgenden Beziehung genügt:

$$D = d - 2S + 2K$$

wobei D der Durchmesser des Mitnehmerrings (102), d der Außendurchmesser des Kreismessers (114), S die Platinendicke (jeweils in mm angegeben) und K ein Koeffizient ist, der zwischen 1 und 3 liegt.

## Claims

1. Circular shears, for the processing of sheet metal, with a clamping device for the rotatable clamping-in of a plate and with a machine housing (10), in which circular knives (2, 5) with drive means are housed, wherein an upper knife (2) cooperates with a lower knife (5) and the upper knife (2) is held in a pivot arm (7) borne in the machine housing (10) to be pivotable up and down, characterised thereby, that the upper knife (2) is arranged in the pivot arm (7) to be pivotable laterally about an axis (Fig. 4) extending parallely to the axis (1) of the drive shaft.

2. Circular shears, for the processing of sheet metal, with a clamping device for the rotatable clamping-in of a plate and with a machine housing (10), in which circular knives (2, 5) with drive means are housed, wherein an upper knife (2) cooperates with a lower knife (5) and the upper knife (2) is held in a pivot arm (7) borne in the machine housing (10) to be pivotable up and down, characterised thereby, that the upper knife (2) is arranged in the pivot arm (7) to be pivotable laterally about an axis (13; Fig. 6), which is perpendicular to the axis (1) of the drive shaft.

3. Circular shears according to claim 1 or 2, characterised thereby, that the shaft of the lower knife (5) sits in the machine housing (10) and points obliquely upwards.

4. Circular shears according to claim 1 and/or 3, characterised thereby, that the pivot arm (7) bears a pipe piece (16) displaced eccentrically of the longitudinal plane (X), wherein the pipe piece (16) carries the knife shaft (8) with opposite eccentricity on roller bearings, wherein the pipe piece (16) is arranged in the pivot arm (7) to be rotatable about the longitudinal axis.

5. Circular shears according to claim 4, characterised thereby, that the pivot arm (7), which consists of two fork arms (7a, 7b), in the free end region displays a block (11), in which a bore (13) is disposed, which by an annular step (14) passes over into the bore (15) of smaller diameter, the bore (13) sits eccentrically in the block (11), the pipe piece (16) is rotatably borne shapelockingly in the bores (13, 15) and in the free end region externally displays an encircling rim (17), wherein the edge of the rim (17) bears against the annular step (14), the pipe piece (16) displays an external thread (18), onto which a clamping ring (19) is screwed, against which a compression spring (20) bears, which sits on the pipe piece (16) and for which edges (21) in recesses (22) in the fork arms (7a, 7b) serve as counterbearings, the drive shaft (8) of the upper knife (2) is rotatably supported in the interior of the pipe piece (16), for which preferably a conical roller bearing (26) serves, which sits in a receiving bore (27) of the pipe piece (16) and on the shaft (8), wherein the central axis of the pipe piece (16) is arranged to be displaced laterally.

6. Circular shears according to claim 4 and/or 5, characterised thereby, that holes (23) in a transverse row are provided in the shell of the pipe piece (16), wherein an opening (24) and (25) is preferably provided respectively in the housing (10) and in the fork arm (7b).

7. Circular shears according to one or more of the claims 4 to 6, characterised thereby, that the central axis of the pipe piece (16) is arranged to be displaced laterally relative to the Z-plane by the amount E, wherein the amount of the displacement is equal to the amount of the displacement of the bore (13), but arranged spatially opposite.

8. Circular shears according to one or more of the claims 4 to 7, characterised thereby, that the bore (27) is frontally covered by a protective metal plate (28), on which a pointer (30) is arranged, wherein a scale (29) is applied frontally at the pivot arm (7).

9. Circular shears according to claim 2 and/or 3, characterised thereby, that a carrier plate (12), under which a block (14), which bears the drive shaft (8) of the upper knife (2) in a bushing (15), hangs to be rotatable laterally about an axis (13) arranged perpendicularly to the plane of the plate, is inserted between both the fork arms (7a and 7b) in the pivot arm (7).

10. Circular shears according to claim 9, characterised thereby, that the pivot bearing of the block (14 ; Figs. 6, 7 and 9) displays a threaded bolt (16), the bolt (16) is provided at the ends with threaded portions (17, 18), wherein the threaded portion (17) is screwed into the upper wall (19) of the block (14), the threaded portion (17) is adjoined by a flange (20), which sits in a corresponding recess (21) of the upper wall (19), the middle part (22) of the bolt (16) is rotatably plugged in a bushing (23), which is divided across the centre and firmly let into a bore (24) in the carrier plate (12), the flange rim (20) bears against the lower bushing rim (25), while a stepped rim (28) of the nut (27), which is screwed onto the threaded portion (18), bears against the upper bushing rim (26).

11. Circular shears according to claim 10, characterised thereby, that the pivotation of the upper knife (2) is accomplished with the counterbearings (29, 30 ; Fig. 7), which sit laterally in the fork arms (7a, 7b) of the pivot arm (7).

12. Circular shears according to claim 11, characterised thereby, that the counterbearing (30) displays a sleeve (31), which is screwed by a thread (32) into the fork arm (7b), the sleeve (31) by the free part (33) engages through an obliquely arranged opening (34) in the machine housing (10), a support sleeve (37) with a bore (38) sits by a counterrim (36) on the bottom rim (35) of the sleeve (31) and is bevelled in the free end region so that an oblique annular support surface (39) results, the annular support surface (39) bears against a correspondingly bevelled counterbearing surface (40), which is greater in diameter than the surface (39) and arranged in a bore (41) of the block (14), and the support sleeve (37) is pressed in the sleeve (31) by a compression spring element (43) against the bottom rim (35), wherein the spring element (43) bears against a nut (44) screwed into the sleeve (31) at an end.

13. Circular shears according to claim 12, characterised thereby, that the nut (44) possesses a stud (45), which engages through the spring element (43) and is guided in the bore (38) of the support sleeve (37).

14. Circular shears according to claim 11, characterised thereby, that the counterbearing (29) displays a sleeve (46), which is screwed by a thread (47) into the fork arm (7a) of the pivot arm (7), the free part (48) of the sleeve (46) engages through an obliquely set opening (34) in the machine housing (10), an abutment bolt (49) shape-lockingly sits sliding to and fro in the sleeve (46), engages through the sleeve mouth (50) and at the free end region displays an oblique surface (51), the oblique surface (51) sits on an oblique surface (52) of an insert piece (42), which is let into a bore (41) of the block (14), the bolt (49) displays a collar (53), into which a longitudinal groove (54) is worked, in which sits the end of the shank of a screw (55) sitting in the sleeve wall, the collar (53) corresponds with an annular abutment edge (56) in the sleeve (46), and a threaded bolt (57), which abuts areally against the sliding bolt (49), is screwed in in the free end region of the part (48) of the sleeve (46).

15. Circular shears according to claim 14, characterised thereby, that a cap (58) is arranged on the bolt (57).

16. Circular shears according to claim 14 and/or 15, characterised thereby, that a screw (60) is provided, which engages through a web (61) of the sleeve (46) and is screwed into the fork arm (7a).

17. Circular shears according to one or more of the claims 9 to 16, characterised thereby, that a scale (62) is applied frontally at the carrier plate (12) and a pointer (63) is arranged at the end wall of the block (14).

18. Circular shears according to one or more of the claims 1 to 17, characterised by a drive device, coupled with at least one circular knife drive, for the plate (104).

19. Circular shears according to claim 18, characterised thereby, that the drive device is coupled with the drive shaft (105) of the upper knife (106) (Fig. 12).

20. Circular shears according to claim 19, characterised thereby, that the drive device sits on the drive shaft (105) of the upper knife (106), which is borne to be pivotable up and down.

21. Circular shears according to one or more of the claims 18 to 20, characterised thereby, that the drive device is an entraining roller (117).

22. Circular shears according to claim 21, characterised thereby, that the entraining roller (117) consists of a rear flange ring (101) and a front flange ring (103), between which an entraining ring (102) of elastic material sits clamped in.

23. Circular shears according to claim 22, characterised thereby, that an annular groove (118) is arranged in the flange ring (101) and a corresponding annular groove (119) is arranged in the flange ring (103), which grooves form an annular chamber, for the clamping of the entraining ring (102), wherein the flange ring (103) is fastened by screws or the like fastening means at the flange ring (115) of the circular knife (106).

24. Circular shears according to one or more of the claims 21 to 23, characterised thereby, that the outside diameter D of the entraining ring (102) satisfies the following relationship :

$$D = d - 2S + 2K$$

wherein D is the diameter of the entraining ring (102), d the outside diameter of the circular knife (114), S the thickness of the plate (each given in millimetres) and K is a co-efficient which lies between 1 and 3.

## Revendications

1. Cisaille circulaire pour le travail de la tôle comportant un dispositif de serrage pour fixer à rotation un flan, et un carter de machine (10) dans lequel sont logées des molettes de coupe (2, 5) avec des moyens d'entraînement, une molette supérieure (2) coopérant avec une molette inférieure (5), et la molette supérieure (2) étant tenue dans un bras pivotant (7) monté dans le carter de machine (10) de façon à pouvoir pivoter vers le haut et vers le bas, caractérisée en ce que la molette supérieure (2) est montée dans le bras pivotant (7) de façon à pouvoir pivoter latéralement autour d'un axe parallèle à l'axe (1) de l'arbre d'entraînement.

2. Cisaille circulaire pour travailler la tôle, comportant un dispositif de serrage pour fixer à rotation un flan, et un carter de machine (10) dans lequel sont logées des molettes de coupe (2, 5) avec des moyens d'entraînement, une molette supérieure (2) coopérant avec une molette inférieure (5), et la molette supérieure (2) étant tenue dans un bras pivotant (7) monté dans le carter de machine (10) de façon à pouvoir pivoter vers le haut et vers le bas, caractérisée en ce que la molette supérieure (2) est montée dans le bras pivotant de façon à pivoter latéralement autour d'un axe (13) perpendiculaire à l'axe (1) de l'arbre d'entraînement (figure 6).

3. Cisaille circulaire selon la revendication 1 ou 2, caractérisée en ce que l'arbre de la molette inférieure (5) logé dans le carter de machine (10) est orienté en oblique vers le haut.

4. Cisaille circulaire selon la revendication 1 et/ou 3, caractérisée en ce que le bras pivotant (7) loge un tube (16) excentré par rapport au plan longitudinal (X), le tube (16) portant sur des paliers à rouleaux l'arbre de molette (8) excentré en sens inverse, le tube (16) étant disposé dans le bras pivotant (7) de façon à tourner autour de l'axe longitudinal.

5. Cisaille circulaire selon la revendication 4, caractérisée en ce fait que le bras pivotant (7), constitué de deux bras de fourche (7a, 7b), comporte dans la zone d'extrémité libre un bloc (11) dans lequel se trouve un alésage (13) se raccordant par un décrochement annulaire (14) à un alésage (15) de plus petit diamètre, que l'alésage (13) se trouve excentré dans le bloc (11), que dans les alésages (13, 15) est monté à rotation par coopération de formes le tube (16) qui comporte dans la zone d'extrémité libre à l'extérieur un rebord annulaire (17), l'arête du rebord (17) s'appuyant contre le décrochement annulaire (14), le tube (16) comportant un filetage extérieur (18) sur lequel est vissé un anneau de serrage (19) contre lequel s'appuie un ressort de pression (20) placé sur le tube (16), des arêtes (21) dans des évidements (22) dans les bras de fourche (7a, 7b) servant de butées à ce ressort, l'arbre d'entraînement (8) de la molette supérieure (2) s'appuyant à rotation à l'intérieur du tube (16), de préférence à l'aide d'un palier à rouleaux coniques (26) qui est placé dans un alésage de logement (27) du tube (16) et sur l'arbre (8), l'axe médian du tube (16) étant décalé latéralement.

6. Cisaille circulaire selon la revendication 4 et/ou la revendication 5, caractérisée en ce qu'on prévoit, dans l'enveloppe du tube (16) des trous (23) en rangée transversale, une ouverture (24) ou (25) étant de préférence prévue dans le carter (10) et dans le bras de fourche (7b).

7. Cisaille circulaire selon l'une ou plusieurs des revendications 4 à 6, caractérisée en ce que l'axe médian du tube (16) est décalé latéralement de la valeur E par rapport au plan Z, la valeur du décalage étant égale à la valeur de décalage de l'alésage (13), mais toutefois en sens inverse dans l'espace.

8. Cisaille circulaire selon l'une ou plusieurs des revendications 4 à 7, caractérisée en ce que l'alésage (27) est fermé du côté frontal par une plaque de protection (28) sur laquelle est placé un index (30), une graduation (29) étant fixée du côté frontal sur le bras pivotant (7).

9. Cisaille circulaire selon la revendication 2 et/ou 3, caractérisée en ce que dans le bras pivotant (7), est placée une plaque-support (12) en travers entre les deux bras de fourche (7a et 7b) sous laquelle est suspendu un bloc (14) qui peut tourner latéralement autour d'un axe disposé perpendiculairement au plan de la plaque et qui porte dans un manchon (15) l'arbre d'entraînement (8) de la molette supérieure (2).

10. Cisaille circulaire selon la revendication 9, caractérisée en ce que le palier de pivotement du bloc (14) comporte (figures 6, 7, 9) un goujon (16), que le goujon (16) est pourvu du côté extrémité de portions filetées (17, 18), la portion filetée (17) étant vissée dans la paroi supérieure (19) du bloc (14) et une bride (20) se raccordant à la portion (17) et étant logée dans un évidement correspondant (21) de la paroi supérieure (19), la partie médiane (22) du goujon (16) étant logée à rotation dans un manchon (23) divisé transversalement au milieu, fixé dans un alésage (24) de la plaque-support (12), le bord de la bride (20) s'appuyant contre le bord inférieur (25) du manchon, tandis que s'appuie sur le bord supérieur (26) du manchon un bord décroché (28) de l'écrou (27) qui est vissé sur la portion filetée (18).

11. Cisaille circulaire selon la revendication 10, caractérisée en ce que le pivotement de la molette supérieure (2) s'effectue à l'aide des butées (29, 30) (figure 7) qui sont situées latéralement dans les bras de fourche (7a, 7b) du bras pivotant (7).

12. Cisaille circulaire selon la revendication 11, caractérisée par le fait que la butée (30) comporte un manchon (31) qui est vissé par un filetage (32) dans le bras de fourche (7b) que le manchon (31) traverse en oblique dans le carter de machine (10), que sur le rebord terminal (35) du manchon (31) s'appuie par un rebord opposé (36) un manchon de soutien (37) muni d'un alésage (38) biseauté dans la zone d'extrémité libre, de sorte qu'il en résulte une surface annulaire de soutien oblique (39), que la surface annulaire de soutien (39) s'appuie contre une surface de butée (40) biseautée de façon correspondante, dont le diamètre est plus grand que la surface (39) et qui est disposée dans un alésage (41) du bloc (14), que le manchon de soutien (37) est pressé contre le rebord terminal (35) dans le manchon (31) par un élément de ressort de pression (43), l'élément de ressort (43) s'appuyant contre un écrou (44) vissé du côté extrémité dans le manchon (31).

13. Cisaille circulaire selon la revendication 12, caractérisée en ce que l'écrou (44) comporte une tige filetée (45) qui traverse l'élément de ressort (43) et est guidée dans l'alésage (38) du manchon de soutien (37).

14. Cisaille circulaire selon la revendication 11, caractérisée en ce que la butée (29) comporte un manchon (46) qui est vissé par un filetage (47) dans le bras de fourche (7a) du bras pivotant (7), que la partie libre (48) du manchon (46) traverse une ouverture (34) disposée en oblique dans le carter (10), que dans le manchon (46) coulisse dans un sens et dans l'autre par coopération de formes une tige de butée (49) qui traverse l'embouchure (50) du manchon et comporte dans la zone d'extrémité libre une surface oblique (51), que la surface oblique (51) repose sur une surface oblique (52) d'un élément de garniture (42) qui est inséré dans un alésage (41) dans le bloc (14), que la tige (49) comporte un épaulement (53) dans lequel est ménagée une rainure longitudinale (54) dans laquelle est enfoncée l'extrémité du fût d'une vis (55) logée dans la paroi du manchon, que l'épaulement (53) coopère avec une arête annulaire de butée (56) dans le manchon (46), que dans la zone d'extrémité libre de la partie (48) du manchon (46) est vissé un boulon (57) qui bute par sa surface contre la tige coulissante (49).

15. Cisaille circulaire selon la revendication 14, caractérisée en ce que sur le boulon (57) est placé un capuchon (58).

16. Cisaille circulaire selon la revendication 14 et/ou 15, caractérisée en ce qu'on prévoit une vis (60) qui traverse un ressaut (61) du manchon (46) et est vissée dans le bras de fourche (7a).

17. Cisaille circulaire selon l'une ou plusieurs des revendications 9 à 16, caractérisée en ce qu'une graduation (62) est appliquée du côté frontal sur la plaque-support (12) et qu'un index (63) est disposé sur la paroi frontale du bloc (14).

18. Cisaille circulaire selon l'une ou plusieurs des revendications 1 à 17, caractérisée par un dispositif d'entraînement pour le flan (104) couplé avec au moins un entraînement de molette.

19. Cisaille circulaire selon la revendication 18, caractérisée en ce que le dispositif d'entraînement est couplé avec l'arbre d'entraînement (105) de la molette supérieure (106) (figure 12).

20. Cisaille circulaire selon la revendication 19, caractérisée en ce que le dispositif d'entraînement est placé sur l'arbre d'entraînement (105) de la molette supérieure (106) montée à pivotement vers le haut et vers le bas.

21. Cisaille circulaire selon l'une ou plusieurs des revendications 18 à 20, caractérisée en ce que le dispositif d'entraînement est un galet d'entraînement (117).

22. Cisaille circulaire selon la revendication 21, caractérisée en ce que le galet d'entraînement (117) est constitué par une bride annulaire postérieure (101) et une bride annulaire antérieure (102) entre lesquelles est bloquée une bague d'entraînement (102) en matériau élastique.

23. Cisaille circulaire selon la revendication 22, caractérisée en ce que, pour bloquer la bague d'entraînement (102), on prévoit dans la bride annulaire (101) une gorge annulaire (118) et dans la bride annulaire (103) une gorge annulaire correspondante (119) qui constituent une chambre annulaire, la bride annulaire (103) étant fixée par des vis ou autres moyens de fixation sur la bride annulaire (115) de la molette (106).

24. Cisaille circulaire selon l'une ou plusieurs des revendications 21 à 23, caractérisée en ce que le diamètre extérieure de la bague d'entraînement (102) satisfait l'équation suivante :

$$D = d - 2S + 2K$$

dans laquelle D est le diamètre de la bague d'entraînement (102), d est le diamètre extérieure de la molette (114), S est l'épaisseur du flan (respectivement donnés en mm) et K est un coefficient compris entre 1 et 3.

# FIG.1

# FIG.2

FIG. 3

FIG.4

FIG.5

FIG. 6

FIG. 7

FIG. 8

FIG.9

0 035 764

FIG.10

FIG.11

**FIG.12**

**FIG.13**